(19) Europäisches Patentamt
European Patent Office
Office européen des brevets

(11) EP 0 511 632 B1

(12) EUROPEAN PATENT SPECIFICATION

(45) Date of publication and mention of the grant of the patent:
**19.11.1997 Bulletin 1997/47**

(51) Int Cl.[6]: **H01M 4/58**, H01M 10/40

(21) Application number: **92107216.1**

(22) Date of filing: **28.04.1992**

# (54) Nonaqueous electrolyte secondary battery

Sekundärbatterie mit nichtwässrigen Elektrolyten

Batterie secondaire à électrolyte non-aqueux

(84) Designated Contracting States:
**DE FR GB**

(30) Priority: **30.04.1991 JP 126913/91**
**29.06.1991 JP 185129/91**

(43) Date of publication of application:
**04.11.1992 Bulletin 1992/45**

(73) Proprietor: **SONY CORPORATION**
**Tokyo (JP)**

(72) Inventors:
- **Sekai, Kohji**
  **Kitashinagawa-ku, Tokyo (JP)**
- **Endo, Takuya**
  **Kitashinagawa-ku, Tokyo (JP)**

(74) Representative: **Müller, Frithjof E., Dipl.-Ing.**
**Patentanwälte**
**MÜLLER & HOFFMANN,**
**Innere Wiener Strasse 17**
**81667 München (DE)**

(56) References cited:
**EP-A- 0 421 421** **EP-A- 0 484 187**
**US-A- 4 357 215** **US-A- 4 668 595**

- **CHEMICAL ABSTRACTS, vol. 113, no. 10, September 3, 1990, Columbus, Ohio, USA OKAMOTO, KAORI et al. "Cobalt lithium copper titanium oxide thermistor" page 763, abstract-no. 89 603w**
- **CHEMICAL ABSTRACTS, vol. 109, no. 17, October 24, 1988, Columbus, Ohio, USA KIMURA, TOMO et al. "Colored flake powders for coating" page 112, abstract-no. 151 558h**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 511 632 B1

## Description

This invention relates to a chargeable and dischargeable, non-aqueous electrolyte secondary battery which is employed as a power source for various electronic appliances.

For the recent drastic progress of electronic appliances, studies have been made on re-chargeable secondary batteries which can be conveniently, economically used as a power source over a long time. Typical known secondary batteries include lead storage batteries, alkaline storage batteries and lithium secondary batteries. Of these, lithium secondary batteries are advantageous with respect to the high output power and the high energy density.

The lithium secondary batteries, are constituted of a positive electrode which is made of an active substance capable of undergoing reversible electrochemical reaction with lithium ions, a negative electrode comprising lithium metal or lithium, and a non-aqueous electrolyte.

In general, the active substances used for the negative electrode include metallic lithium, lithium alloy (e.g. Li-Al alloys), lithium-doped conductive polymers (e.g. polyacetylene , and polypyrrole), or layer compounds intercalating lithium ions in the crystals thereof. The electrolytic solution is one in which lithium salts are dissolved in aprotic solvents.

The active substances for the positive electrode include metal oxides, metal sulfides or polymers such as, for example, $TiS_2$, $MoS_2$, $NbSe_2$ and $V_2O_5$.

The discharge reaction of the lithium secondary battery using these substances proceeds such that lithium ions are dissolved out in the electrolytic solution at the negative electrode and are intercalated inbetween the layers of the active substance at the positive electrode. On the contrary, for the charging, the reverse reaction as set out above proceeds wherein lithium is de-intercalated at the positive electrode. More particularly, the reactions wherein the lithium ions from the negative electrode are intercalated in and de-intercalated from the active substance for the positive electrode are repeated, thereby repeating the charge and discharge cycles.

However, when the known lithium secondary batteries are repeatedly charged and discharged, the discharge capacity and the charge and discharge efficiencies are gradually lowered, leading to the disadvantage that a satisfactory cycle life cannot be obtained. The reason why the discharge capacity and the charge and discharge efficiencies are lowered is considered as follows. The active substances undergo irreversible changes such as a change in the crystal structure of the active substance for the positive electrode. When the battery is so charged that the potential of the positive electrode becomes higher or lower than a potential window, the electrolyte is decomposed. Moreover, lithium and the electrolyte react with each other to form a protective film, by which part of precipitated lithium cannot be dissolved or part of the precipitated lithium metal is converted to needle-like (dendrite) crystals which are sparingly soluble.

In U.S. Patent No. 4357215, there is proposed a non-aqueous electrolyte secondary battery which comprises $LixMyO_2$ (wherein M is Ni or Co, $x<0.8$, and $y \doteqdot 1$) as an active substance for positive electrode, and lithium metal as an active substance for negative electrode. This non-aqueous electrolyte secondary battery has an electromotive force of not less than 4 V and a high energy density, but has the problem on the degradation of the cycle life as set forth hereinabove.

Many attempts have been made to the improvement of the $LixMyO_2$-based active substance for the positive electrode. For instance, in U.S. Patent No. 4668595, there is used, as an active substance for positive electrode, $AxMyNzO_2$ (wherein A represents an alkali metal, $0.05 \leqq x \leqq 1.10$, M represents a transition metal, $0.85 \leqq y \leqq 1.00$, N represents Al, In or Sn and $0.001 \leqq z \leqq 0.10$). Moreover, U.S. Patent No. 4668595 makes use, as the active substance, of $AxByCzDwO_2$ (wherein A represents an alkali metal, $0.05 \leqq x \leqq 1.10$, B represents a transition metal, $0.85 \leqq y \leqq 1.00$, C represents Al, In or Sn, $0.001 \leqq z \leqq 0.10$, D represents an alkali metal other than A, a transition metal other than B, an element of Group IIa of the periodic table, Al, In, Sn, carbon, nitrogen, or an element of periods 2 to 6 of Groups IIIb, IVb, Vb and VIb except for nitrogen and oxygen, and $0.001 \leqq w \leqq 0.10$).

However, the use of these active substances is not satisfactory with respect to the cycle life. In order to employ the non-aqueous electrolyte secondary batteries typical of which is a lithium secondary battery in practical applications, improvements of the active substances for positive and negative electrodes are essentially required as not lowering the charge and discharge capacity, charge and discharge efficiencies and electrode potentials of the active substances.

EP-A-421 421 discloses a non-aqueous electrolyte secondary battery comprising an anode containing lithium or lithium compound, a non-aqueous electrolyte, and a cathode having as an active material a lithium cobalt composite oxide doped with titanium.

Under these circumstances, the present invention has been accomplished and has for its object the provision of a non-aqueous electrolyte secondary battery which is not lowered after repetition of charge and discharge cycles with respect to the charge and discharge capacities, charge and discharge efficiencies and battery potential.

In order to achieve the above object, we made intensitve studies and, as a result, found that when titanium atoms are provided in the vicinity of the surface of an active substance for the positive electrode to improve chemical and physical properties of the active substance of the positive eletrode in the vicinity of the surface thereof, the cycle life of the battery can be improved.

Accordingly, the present invention provides an organic electrolyte secondary battery of the type which comprises an inorganic compound as an active substance for the positive electrode, which is characterized in that said active substance for the positive electrode has a titanium-added surface layer, wherein said active substance has a lower titanium content than said titanium-added surface layer.

Fig.1 is a characteristic graph showing the variation in capacity retention rate in relation to the variation in cycle number of an organic electrolyte secondary battery of the invention and an organic electrolyte secondary battery which makes use of an active substance for the positive electrode having no titanium added in or on the surfaces thereof.

How to form the titanium-added surface layer on or in the surface of the active substance for the positive electrode may be, for example, a method wherein a titanium oxide is uniformly added to the active substance for the positive electrode to make a solid solution. In the practice of the invention, for the purpose of preventing the electrode potential from lowering, the titanium-added surface layer should preferably be formed only in the vicinity of the surfaces of the active substance for the positive electrode. For that purpose the active substance is surface treated with a titanium coupling agent and then thermally treated.

When the titanium coupler is acted on the surface of an active substance for the positive electrode, the titanium coupler reacts with OH groups present in the surface of the active substance to chemically modify the surface of the active substance.

After the surface treatment with the titanium coupler, thermal treatment under predetermined conditions is performed to obtain a titanium-added surface layer wherein titanium is converted to a solid solution with the active substance for positive electrode only in the vicinity of the surfaces of the substance.

Examples of the titanium coupler include an isopropyltriisostearoyl titanate coupler (commercial name of KR-TTS, available from Ajinomoto Co., Ltd.), an isopropyltri(N-aminoethyl-aminoethyl) titanate coupler (commercial name of KR-44, available from Ajinomoto Co., Ltd.) and an isopropyltri(dioctylphosphate)titanate coupler (commercial name of KR-12, available from Ajinomoto Co., Ltd.). These titanium couplers are represented by the formulas of (a), (b) and (c).

(a) Isopropyltriisostearoyl titanate coupling agent

$$CH_3-\overset{\overset{CH_3}{|}}{C}H-O-Ti-(-O-\overset{\overset{O}{\|}}{C}-C_{17}H_{35})_3 \qquad \cdots (1)$$

(b) Isopropyltri(N-aminoethyl-aminoethyl) titanate coupling agent

$$\overset{\overset{CH_3}{|}}{CH_3}-CH-O-Ti-(-OC_2H_4-NH-C_2H_4-NH_2)_3 \qquad \cdots (2)$$

(c) Isopropyltri(dioctylphosphate) titanate coupling agent

$$\overset{\overset{CH_3}{|}}{CH_3}-CH-O-Ti-[-\overset{\overset{O}{\|}}{O}-P-(-O-C_8H_{17})_2]_3 \qquad \cdots (3)$$

In practice, these titanium coupling agents or couplers are used after dissolution in water or an organic solvent. Examples of the organic solvent include general-purpose solvents such as xylene, methyl ethyl ketone, toluene or cyclohexanone.

The active substance for the positive electrode may be inorganic compounds ordinarily used in this type of battery as an active substance for positive electrode. Especially, composite metal oxides containing lithium which are of the formula, LixMO2 ($0<x\leqq1$) are preferred. More preferably, composite oxides of lithium and transition metals are used. More particularly, there are mentioned $LiCoO_2$, $LiNiyCo_1$-yO ($0<y<1$), $LiNiO_2$, $LiMn_2O_2$ and mixtures thereof.

On the other hand, the materials used as the active substance for the negative electrode are not critical and include, for example, metallic lithium, lithium alloys (e.g. Li-Al alloys), lithium ion-doped conductive polymers (e.g. polyacetylene and polypyrrole), layer compounds intercalating lithium ions in the crystals (e.g. $TiS_2$, $MoS_2$ intercalating lithium inbe-

tween the layers thereof), or carbonaceous materials capable of doping and de-doping lithium ions.

The electrolytes used include aprotic organic electrolytes wherein lithium salt electrolytes are dissolved in organic solvents.

The organic solvents include esters, ethers, 3-substituted-2-oxazolidinones and mixtures thereof. Specific examples of the organic solvent include, as esters, alkylene carbonates such as ethylene carbonate, propylene carbonate, γ-butyrolactone and 2-methyl-γ-butyrolactone.

Examples of the ethers include diethyl ether, dimethoxyethane and cyclic ethers. Ethers having a five-membered ring include, for example, tetrahydrofuran, alkyl-substituted tetrahydrofurans such as 2-methyltetrahydrofuran, 2,5-dimethyltetrahydrofuran, 2-ethyltetrahydrofuran and 2,2'-dimethyltetrahydrofuran, alkoxy-substituted tetrahydrofurans such as 2-methoxytetrahydrofuran and 2,5-dimethoxytetrahydrofuran, and ethers having six-membered ring include 1,4-dioxorane, pyran, dihydropyran and tetrahydropyran.

Examples of 3-substituted-2-oxazolidinones include 2-alkyl-2-oxazolidiones such as 3-methyl-2-oxaolidinone and 3-ethyl-2-oxazolidione, 3-cycloalkyl-2-oxazolidinnes such as 3-cyclohexyl-2-oxazolidinone, 3-aralkyl-2-oxazolidinones such as 3-benzyl-2-oxazolidinone, 3-aryl-2-oxazolidinones such as 3-phenyl-2-oxazolidinone.

Of these, it is preferred to use propylene carbonate, dimethoxyethane, five-membered ethers (including tetrahydrofuran, 2-methyltetrahydrofuran, 2-ethyltetrahydrofuran, 2-methoxytetrahydrofuran and 2,5-dimethoxytetrahydrofuran), and 3-methyl-2-oxazolidinone.

The electrolytes may be lithium perchlorate, lithium borofluoride, lithium phosphorus fluoride, lithium chloroaluminate, lithium halides, lithium trifluoromethanesulfonate, $LiAsF_6$ or $LIB(C_6H_5)_4$. Of these, lithium perchlorate, lithium borofluoride and lithium phosphorus fluoride are preferred.

The present invention is described by way of example, which should not be construed as limiting the invention.

In this example, a LiCoO metal oxide was used as an active substance for the positive electrode and was chemically modified on the surfaces thereof with an isopropyltri(N-aminoethyl-aminoethyl) titanate coupling agent represented by the formula (2), followed by thermal treatment thereby causing titanium to be subjected to solid solution with the $LiCoO_2$ metal oxide in the vicinity of the surfaces.

Initially, the isopropyltri(N-aminoethylaminoethyl) titanate coupling agent (commercial name KR-44, available from Ajinomoto Co., Ltd.) was provided for coupling treatment of the $LiCoO_2$ metal oxide. In order to keep the concentration of OH groups present in the surfaces of the $LiCoO_2$ metal oxide at a level as high as possible, the $LiCoO_2$ metal oxide was immersed for alkaline treatment in a 20% NaOH aqueous solution set at about 80°C.

By the coupling treatment, the reaction between the OH groups present in the $LiCoO_2$ metal oxide and the isopropyl (N-aminoethyl-aminoethyl) titanate coupling agent as shown in the following formula proceeded to adsorb the isopropyl (N-aminoethyl-aminoethyl) titanate coupler on the surfaces of the $LiCoO_2$ metal oxide.

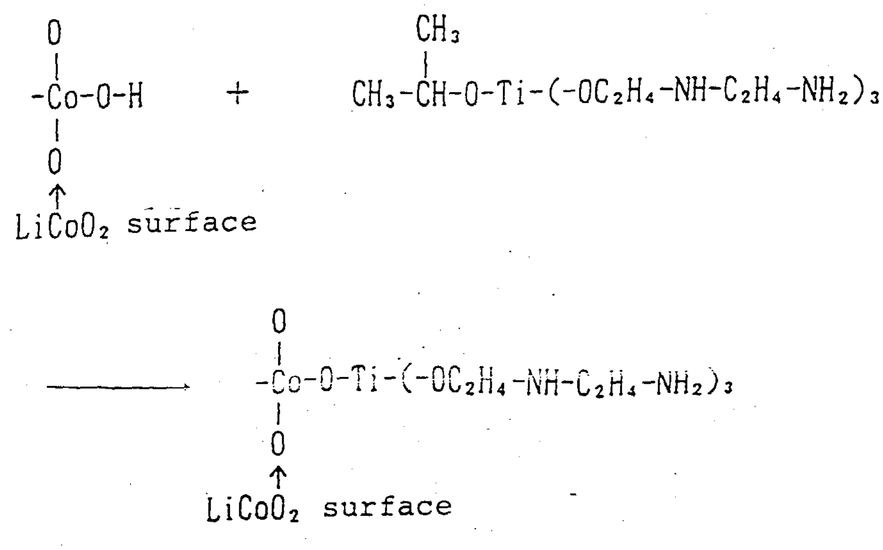

Subsequently, the titanate coupling agent-treated $LiCoO_2$ metal oxide was thermally treated in air at a temperature of 90°C for 30 minutes.

The thus obtained $LiCoO_2$ metal oxide was subjected to surface analysis according to a X-ray photoelectric spectrometry.

As a result, the spectrum of the 2p orbit of titanium was observed, from which it was confirmed that the titanium

atoms existed in the vicinity of the surface of the $LiCoO_2$ metal oxide. The bond energy at $2p_{3/2}$ of the spectrum was found to be 453.8 eV and the energy space between $2p_{3/2}$ and $2P_{1/2}$ was 5.6 eV. These values are substantially coincident with the spectrum of $TiO_2$ (bond energy at $2p_{3/2}$: 453.8 eV and energy space between $2p_{3/2}$ and $2p_{1/2}$: 5.7 eV). From this, the added titanium atom is assumed to exist as a tetravalent cation, $Ti^{4+}$.

Since the added titanium atoms are diffused in the direction toward the inside of the $LiCoO_2$ metal oxide, the added range is considered to be several atom layers in the vicinity of the surface. Assuming that the titanium atom layer exists only in the outermost metal atom layer of the $LiCoO_2$ metal oxide wherein 16.5% of the peak area of the spectrum observed with respect to the Co atom depends on the Co atoms present in the outermost metal atom layer, the ratio of Ti atoms and Co atoms, Ti/Co, in the outermost metal atom layer is determined as about 8% from the peak area of the spectrum. Accordingly, the ratio of the Ti atoms and the Co atoms, Ti/Co, in the outermost metal atom layer is assumed to be not larger than 8%.

The ratio, K, of the outermost metal atom layer to the total area of the analysis according to the X-ray photoelectric spectrometry is shown in the following Math.

Formula 1

[Math. Formula 1]

$$K = 1-\exp(-t/\lambda, \sin\theta)$$

(wherein t is a thickness of the metal atom layer of the outermost layer, $\lambda$ is a mean free path, and $\theta$ is an angle of escape of a photon.)

With the $LiCoO_2$ metal oxide, t = 0.25 nm, $\lambda$ =2.44 nm and $\theta$ = 35°. When these values are substituted for the Math. Formula 1, the ratio, K, of the outermost metal atom layer is 0.165.

It may be presumed from the X-ray diffraction pattern whether or not the titanium-added $LiCoO_2$ metal oxide is of the single phase. However, the titanium added is very small in amount in the vicinity of the surface of the $LiCoO_2$ metal oxide, making it difficult to determine. If the oxide is present as a single phase, the surface layer is assumed to be made of a solid solution of Co and Ti as illustrated in the following formula.

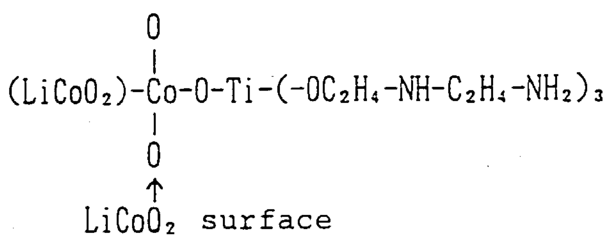

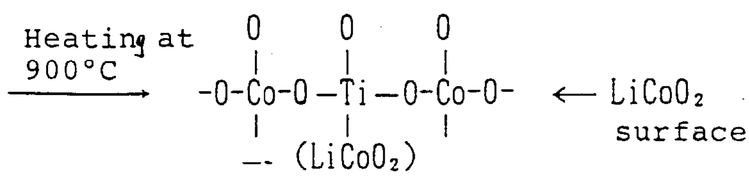


Coin-shaped batteries were made using the $LiCoO_2$ metal oxide to which titanium is added in the vicinity of the surfaces as an active substance for the positive electrode, metallic lithium as an active substance for negative electrode, and an electrolyte obtained by dissolving 1 M $LiPF_6$ in a mixed non-aqueous solvent of propylene carbonate and 1,2-dimethoxyethane.

The organic electrolyte secondary batteries made in this manner and organic electrolyte secondary batteries (for comparison) wherein $LiCoO_2$ metal oxide was not subjected to coupling and thermal treatments without addition of any titanium on the surfaces of the metal oxide were each subjected to a charge and discharge cycle test at a constant current (constant current density 0.27 $mA/cm^2$). The upper voltage at the time of charge was set at 4.1 V, the final voltage at the time of discharge was set at 3.0 V, and the temperature of the electrolyte was set at 23°C. During the

course of the charge and discharge operations, the voltage of the batteries using titanium suffered little change.

It will be noted that the capacity retention rate (ordinate) in Fig. 1 is a ratio of a discharge capacity in each cycle to the maximum discharge capacity.

As shown in Fig. 1, the battery using the $LiCoO_2$ metal oxide which is free of any titanium is lowered in the capacity retention rate when the cycle number increases, whereas the lowering of the capacity retention rate is reduced in the example of the invention. The lowering of the discharge capacity is ascribed to the degradation not only of the positive electrode, but also of the negative electrode. Both types of batteries make use of metallic lithium as the active substance for the negative electrode, so that the degradation of the positive electrodes can be relatively evaluated. Relative assessment was made from the capacity retention rates at the 50th cycle. The lowering rate, $\Delta D_L$, of the discharge capacity in the Comparative Example was about 24%. In contrast, the lowering rate, $\Delta$ Ds, of the discharge capacity in the Example was as low as about 9%. Thus, it will be seen that the lowering rate of the discharge capacity can be suppressed by 63% by the addition of titanium in the vicinity of the surface of the $LiCoO_2$ metal oxide.

The $LiCoO_2$ metal oxide was also treated with an isopropyltriisostearoyl titanate coupling agent (commercial name of KR-TTS, available from Ajinomoto Co., Ltd.) or isoproyltri(dioctylphosphate) titanate coupling agent (commercial name KR-12, available from Ajinomoto Co., Ltd.), followed by thermal treatment to obtain solid solutions of titanium and the $LiCoO_2$ on the surfaces thereof. Organic electrolyte secondary batteries using the respective $LiCoO_2$ metal oxides as the active substance for the positive electrode were made and subjected to a charge and discharge cycle test in the same manner as set out above, whereupon it was found that the lowering of the discharge capacity was very small in all the cases. Accordingly, it will be seen that the chemical modification of the active substance for the positive electrode with the coupling agents is effective in suppressing the lowering of the cycle life.

**Claims**

1. An organic electrolyte secondary battery of the type which comprises an inorganic compound as an active substance for the positive electrode, **characterized in that** said active substance for the positive electrode has a titanium-added surface layer, wherein said active substance has a lower titanium content than said titanium-added surface layer.

2. The organic electrolyte secondary battery according to claim 1, c**haracterized in that** the titanium-added surface layer is formed by surface treatment with a titanium-coupling agent and a subsequent thermal treatment.

3. The organic electrolyte secondary battery according to claim 1, wherein the negative electrode is formed of carbonaceous material which can be doped and dedoped by lithium.

4. The organic electrolyte secondary battery according to claim 1, wherein the negative electrode is formed of Li metal.

**Patentansprüche**

1. Sekundärbatterie mit organischem Elektrolyten, die eine anorganische Verbindung als aktives Material für die positive Elektrode enthält, **dadurch gekennzeichnet**, daß das aktive Material für die positive Elektrode eine Oberflächenschicht besitzt, der Titan zugesetzt ist, wobei das aktive Material einen geringeren Gehalt an Titan aufweist als die Oberflächenschicht, der Titan zugesetzt ist.

2. Sekundärbatterie mit organischem Elektrolyten gemäß Anspruch 1, **dadurch gekennzeichnet,** daß die Oberflächenschicht, der Titan zugesetzt ist, durch eine Oberflächenbehandlung mit einem Titan-Kopplungsreagens und einer nachfolgenden Wärmebehandlung erzeugt wird.

3. Sekundärbatterie mit organischem Elektrolyten gemäß Anspruch 1, bei der die negative Elektrode aus einem kohlenstoffhaltigen Material, in das Lithium eingelagert werden kann und aus dem Lithium freigesetzt werden kann, besteht.

4. Sekundärbatterie mit organischem Elektrolyten gemäß Anspruch 1, bei der die negative Elektrode aus Li-Metall besteht.

**Revendications**

1. Batterie secondaire à électrolyte organique du type qui comprend un composé inorganique comme substance active pour l'électrode positive, caractérisé en ce que ladite substance active pour l'électrode positive a une couche de surface à laquelle on a ajouté du titane, où ladite substance active a une teneur en titane plus faible que ladite couche de surface à laquelle on a ajouté du titane.

2. Batterie secondaire à électrolyte organique selon la revendication 1, caractérisé en ce que la couche de surface à laquelle on a ajouté du titane est formée par un traitement de surface avec un agent de couplage de titane et un traitement thermique ultérieur.

3. Batterie secondaire à électrolyte organique selon la revendication 1, dans laquelle l'électrode négative est formée de matériaux carbonés qui peuvent être dopés et dédopés par du lithium.

4. Batterie secondaire à électrolyte organique selon la revendication 1, dans laquelle l'électrode négative est formée de lithium métallique.

F I G. 1

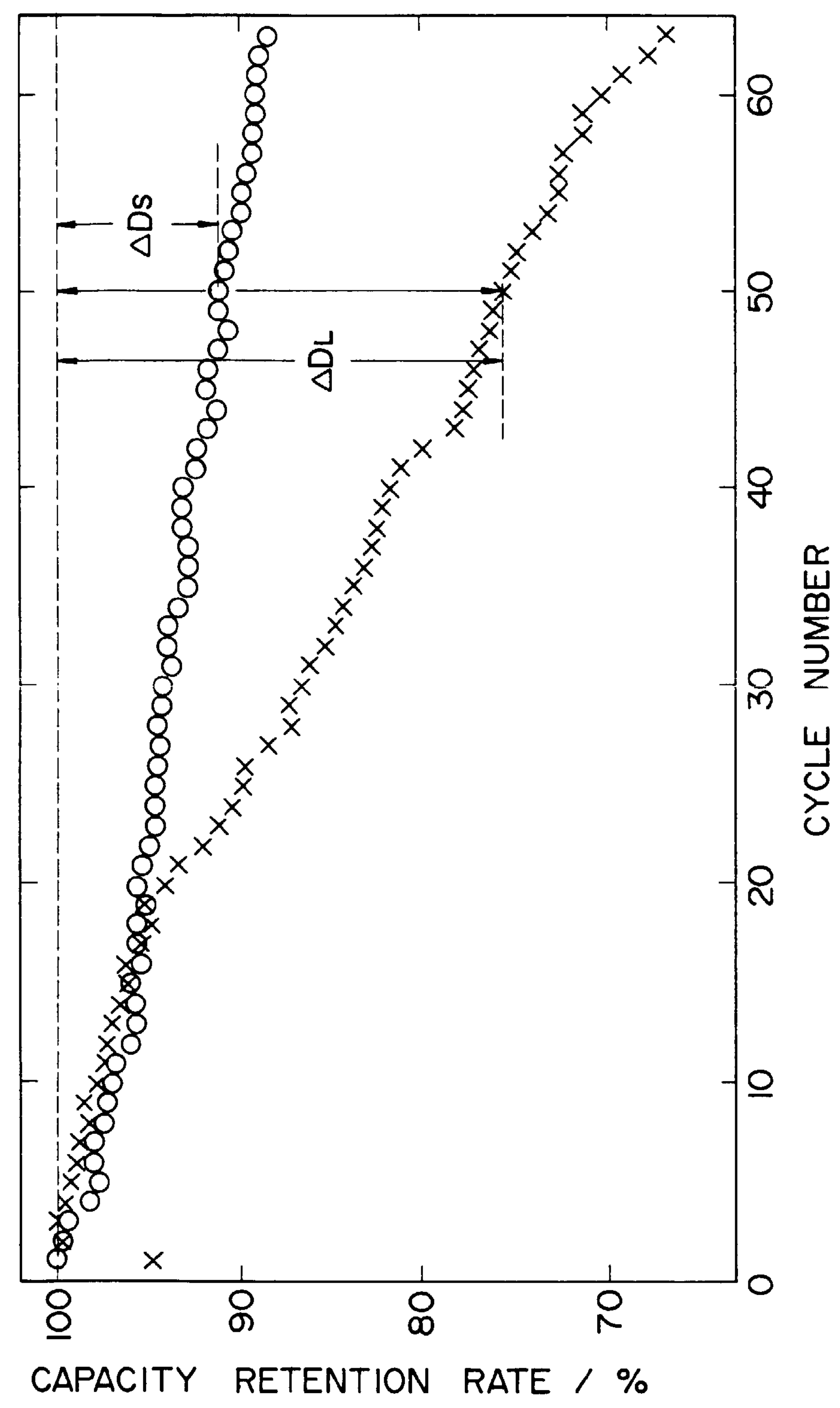
CAPACITY RETENTION RATE / %
100
90
80
70
CYCLE NUMBER
0
10
20
30
40
50
60
ΔDs
ΔDL